# EUROPÄISCHE PATENTANMELDUNG

(11) **EP 1 278 298 A2**
(43) Veröffentlichungstag der Anmeldung: **22.01.2003**
(21) Anmeldenummer: 02015212.0
(22) Anmeldetag: 09.07.2002
(51) Int. Cl.: H02P 1/04

(54) **Verfahren und Vorrichtung zur Steuerung des Anlaufs eines Pumpenantrieb**

(30) Priorität: 12.07.2001 DE 10133861
(71) Anmelder: Netzsch-Mohnopumpen GmbH, D-84478 Waldkraiburg (DE)
(72) Erfinder: Bauer, Helmut, 84405 Dorfen (DE); Denk, Reinhard, 84453 Mühldorf (DE); Hantschk, Günther, 84478 Waldkraiburg (DE); Jarzina, Siegfried, 84478 Waldkraiburg (DE); Kneidl, Franz, 84478 Waldkraiburg (DE); Kreidl, Johann, 84478 Waldkraiburg (DE); Lachenwitzer, Franz, 84478 Waldkraiburg (DE); Rosner, Karl-Heinz, 72296 Schopfloch (DE); Rudert, Wolfgang, 84478 Waldkraiburg (DE); Schmeisser, Achim, 88457 Kirchdorf/Iller (DE); Streubel, Thomas, 84559 Kraiburg a. Inn (DE); Thumser, Alfred, 84544 Aschau (DE); Harvey, James, 84453 M-hldorf (DE); Gutmann, Guido, 84546 Egglkofen (DE); Linde, Hansjürgen, Dr., 96450 Coburg (DE); Neumann, Uwe, 96050 Bamberg (DE); Gradl, Matthias, 96145 Sesslach (DE); Schäfer, Matthias, Dipl.-Ing., 96465 Neustadt (DE)

(57) **Zusammenfassung**

Die Erfindung betrifft eine Vorrichtung zum Antrieb von Pumpen. Durch eine geeignete Steuerung der Anlaufsequenz kann das Anlaufdrehmoment reduziert werden. Hierzu ist ein Sollwertgeber vorgesehen, der eine Anlaufsequenz beginnend mit einem niedrigen Drehmoment, welches unter dem Losbrechmoment liegt und darauffolgend jeweils höhere Drehmomente in wechselnden Richtungen vorgibt. Zudem kann durch zusätzliche mechanische Umsetzung der Rotation in Translation sowie mechanische Energiespeicherung der Anlauf verbessert werden.

## Beschreibung

Die Erfindung bezieht sich auf ein Antriebssystem welches vorzugsweise für Pumpen, insbesondere für Exzenterschneckenpumpen einsetzbar ist.

Die nachfolgenden Ausführungen beziehen sich der Anschaulichkeit halber auf Pumpen, die Erfindung selbst bezieht sich aber auf den Antrieb beliebiger Geräte, bei denen ein gegenüber dem Betriebsdrehmoment höheres Anlaufdrehmoment notwendig ist.

Pumpen, wie Kreiselpumpen oder auch Exzenterschneckenpumpen, werden meist durch elektrische Antriebe angetrieben. Bei der Dimensionierung dieser Antriebe steht die Wirtschaftlichkeit im Vordergrund. Daher sollten die Investitionen und auch die laufenden Betriebskosten minimiert werden. Beides läßt sich mit kleiner dimensionierten Antriebseinheiten erreichen. So sind bei einer kleineren Antriebseinheit durch den kleineren Motor und eine Steuereinheit mit geringerer Nennleistung die Investitionskosten niedriger. Gleichzeitig sind auch die laufenden Kosten im Betrieb aufgrund der niedrigeren Energieaufnahme geringer. Somit ist eine der wichtigen Aufgaben bei der Dimensionierung einer Pumpe die Minimierung der Lebenszykluskosten, die zu einem hohen Anteil aus den Energiekosten bestehen.

In der Regel genügt es allerdings nicht, den Antrieb einer Pumpe auf die Dauerantriebsleistung auszulegen, denn häufig ist das Anlaufdrehmoment der Pumpe wesentlich höher als das im kontinuierlichen Betrieb benötigte Drehmoment. Dies wird durch verschiedene Einflüsse verursacht. So ist beispielsweise an verschiedenen Stellen des Antriebs und der Pumpe, insbesondere an Dichtungs- und Lagerflächen die gegenüber der Gleitreibung höhere Haftreibung zu überwinden. Zudem können Partikel, welche sich imArbeitsmedium der Pumpe befinden, eine Blockierung oder zumindest ein höheres Antriebsmoment bewirken.

Je nach Ausführungsform der Pumpe können erhebliche Unterschiede in dem Verhältnis vom Anlaufdrehmoment zum Betriebsdrehmoment bestehen. Ein besonders hohes Anlaufdrehmoment wird beispielsweise bei Exzenterschneckenpumpen benötigt. Hier besteht eine gewisse Vorspannung zwischen Rotor und Stator, die für die Funktion der Pumpe unbedingt erforderlich ist. Diese Vorspannung beeinflusst zunächst im Pumpbetrieb das zu überwindende Moment. Während eines Stillstands der Pumpe setzt der sogenannte Compression-Set ein. Das bedeutet, daß der Stator durch Relaxationsvorgänge stark am Rotor anhaftet. Zum Anlaufen der Pumpe ist dadurch ein wesentlich höheres Moment, das Losbrechmoment, erforderlich. Zur Überwindung dieses Losbrechmoments ist der Antrieb wesentlich größer als für den laufenden Betrieb zu dimensionieren. Diese Tatsache kann im Betrieb mit klebrigen, sedimentierenden bzw. schlecht schmierenden Medien erheblich verstärkt werden. Damit ergibt sich wiederum eine unwirtschaftliche Größe des Antriebs.

In den weiteren Ausführungen werden die Begriffe Anlaufdrehmoment sowie Losbrechmoment synonym verwendet. Beide beziehen sich auf ein Drehmoment, welches überschritten werden muß, um die angetriebene Einheit in drehende Bewegung zu versetzen.

### Stand der Technik

Oftmals werden teure und aufwendige Antriebe eingesetzt, welche in der Lage sind, das hohe Anlaufdrehmoment der Pumpe aufzubringen. Dies verursacht unnötig hohe Kosten.
Ein anderer Weg wird in der DE 42 15 263 C1 durch eine besondere Steuerung eines Einphasen-Induktionsmotors während des Anlaufvorganges eingeschlagen. Durch eine besondere elektrische Schaltung wird dafür gesorgt, daß der zeitliche Momentenverlauf des Motors stets größer oder kleiner Null ist. Hohe Momentenspitzen sorgen dafür, daß zumindest kurzzeitig ein besonders hohes Drehmoment zum Anfahren zur Verfügung steht, wobei dieses Moment auch pulsiert, so daß ein gewisser Rütteleffekt erreicht wird. Ein in der DE 195 39 656 Al vorgeschlagenes Verfahren ermittelt den Anlaufstrom während des Anlaufvorganges, vergleicht diesen mit einem Maximalwert und verringert das Drehmoment bei Überschreiten des Maximalwerts. Dieses Verfahren wird solange fortgesetzt, bis der Maximal-Strom nicht mehr erreicht wird oder nach einer bestimmten Anzahl von Drehmomentänderungen bzw. nach einer bestimmten Zeit der Antrieb abgeschaltet wird.

Dieses Verfahren hat den Nachteil, daß ein Anlaufen mit einem sehr hoch angesetzten Maximalwert erfolgt. Dies hat eine sofortige hohe Stromaufnahme und eine starke Beanspruchung der ganzen Antriebseinheit zur Folge.

### Darstellung der Erfindung

Der Erfindung liegt die Aufgabe zugrunde, eine Antriebsvorrichtung, welche vorzugsweise zum Antrieb von Pumpen eingesetzt werden kann anzugeben, wobei der elektrische Antrieb selbst mit kleinerer Leistung und dadurch kostengünstiger als vergleichbare Antriebe dimensioniert werden kann und gleichzeitig durch einen schonenderen Anlauf die Lebensdauer der Antriebsvorrichtung erhöht wird.

Eine erfindungsgemäße Lösung dieser Aufgabe ist im Patentanspruch 1 angegeben. Weiterbildungen der Erfindung sind Gegenstand der abhängigen Ansprüche.

Die erfindungsgemäße Vorrichtung besteht aus einer Steuereinheit und einem elektrischen Antrieb sowie einem Anlaufsollwertgeber. Dieser Anlaufsollwertgeber gibt nun der Steuereinheit einen zum Anlauf des Antriebs günstigen zeitlichen Drehmoment-Sollwertverlauf vor. In einer ersten Phase erfolgt eine Steuerung des Antriebs in einer ersten Richtung mit steigendem Drehmoment bis hin zu einem maximalen Anfangsdrehmoment. Dieses maximale Anfangsdrehmoment ist bewußt wesentlich kleiner als das voraussichtliche Losbrechmoment gewählt. Dadurch ergibt sich ein schonenderer Anlauf sowie eine gleichmäßige ansteigende Stromaufnahme der Vorrichtung. In einer weiteren Phase des Anlaufs erfolgt die Steuerung in die entgegengesetzte Richtung mit steigendem Drehmomentverlauf bis zu einem maximalen Drehmoment welches über dem vorhergehenden maximalen Drehmoment liegt. Weitere darauffolgende Phasen des Anlaufs erfolgen mit jeweils wechselnder Richtung und steigendem Drehmomentverlauf bis zu einem maximalen Drehmoment, welches über dem maximalen Drehmoment der jeweiligen vorhergehenden Phase liegt. Diese Anlaufsequenz wird solange fortgesetzt, bis der Antrieb angelaufen ist, das heißt in eine kontinuierliche Drehbewegung übergegangen ist oder ein Grenzwert erreicht wurde. Ein solcher Grenzwert, welcher zum Abbruch der Anlaufsequenz führt, ist beispielsweise das Erreichen bzw. die Überschreitung eines maximalen Drehmoments, eines maximalen Stroms, einer maximalen Spannung, einer maximalen Zeitdauer für den Anlauf oder auch das Erreichen einer maximalen Anzahl Anlaufzyklen. In diesen Fällen kann wahlweise nach einer bestimmten Pause die Anlaufsequenz wiederholt werden.

Die Ausgestaltung der erfindungsgemäßen Vorrichtung folgt aus der Erkenntnis, daß ein Anlauf mit geringerem Anlaufdrehmoment möglich ist, wenn zuvor eine auch nur minimale Bewegung in die entgegengesetzte Richtung erfolgt. Diese minimale Bewegung hat mehrere Auswirkungen. Zunächst einmal wird im Falle von Dichtungen, die an der Antriebswelle oder an anderen beweglichen Teilen der Pumpen anliegen, eine Vorspannung der Dichtung abgebaut. Eine solche Vorspannung ergibt sich durch Anhaften aufgrund der Reibung zwischen Dichtung und drehenden Teilen, welches meist flächig bzw. in mehreren Punkten gleichzeitig stattfindet. Wird nun kurz in die entgegengesetzte Richtung gedreht, so läßt sich diese Vorspannung wieder reduzieren. Für diese Bewegung ist nicht das Anlaufmoment der Vorrichtung notwendig, da die Pumpe selbst nicht oder nur minimal bewegt werden muß. Ein anderer Effekt ist, daß sich durch die Bewegung in die entgegengesetzte Richtung das Haftmoment innerhalb der Pumpe, insbesondere bei Exzenterschneckenpumpen, verringert. Mit einer derart verringerten Vorspannung der Dichtung sowie einer verringerten Haftung innerhalb der Pumpe kann nun der Anlauf in die gewünschte Richtung mit einem wesentlich geringeren Drehmoment erfolgen. Somit ist das notwendige Anlaufdrehmoment der erfindungsgemäßen Vorrichtung niedriger, als das Anlaufdrehmoment der dem Stand der Technik entsprechenden Anordnungen. Somit läßt sich gegenüber dem Stand der Technik eine weitere Reduzierung der Antriebsgröße realisieren.

In den hier gemachten Ausführungen wird der Einfachheit halber auf den Begriff Drehmoment Bezug genommen. Gerade beim Anlauf eines elektrischen Antriebs aus dem Ruhezustand ist das Drehmoment die wichtigste kennzeichnende physikalische Größe, da zum Anlauf ein bestimmtes Anlaufdrehmoment überwunden werden muß. Das Drehmoment eines elektrischen Antriebs wird bestimmt durch verschiedene andere physikalische Größen. Dies kann beispielsweise der Strom oder auch eine zusammengesetzte Größe sein, welche sich beispielsweise bei einer Asynchronmaschine aus der Statorspannung und der Statorkreisfrequenz zusammensetzt. Daher ist sinnvollerweise die Vorgabe eines Drehmoments auf die entsprechenden elektrischen Größen anzuwenden. Zur vereinfachten Realisierung werden sicherlich im Inneren der Steuereinheit die entsprechenden elektrischen Größen, wie beispielsweise der Strom im Falle eines Gleichstromantriebs, als Vorgabegrößen herangezogen.
Da gerade bei Asynchronmaschinen im Betrieb mit eingeprägtem Strom ein direkter Zugriff auf das Drehmoment besteht, ist die erfindungsgemäße Vorrichtung besonders einfach realisierbar.

Eine vorteilhafte Ausgestaltung der Erfindung besteht darin, daß als Grenzwert, der zum Abbruch der Anlaufsequenz führt, ein Drehmomentgrenzwert, ein Stromgrenzwert, ein Spannungsgrenzwert, ein Zeitgrenzwert oder ein aus diesen zusammengesetzter Grenzwert gewählt wird. Da das Drehmoment unmittelbar die Fähigkeit des Antriebs auf den Antriebsstrang einzuwirken ausdrückt, ist dieser der bevorzugte mechanische Parameter zur Beschreibung der Anlaufsequenz. In der Praxis aber wird eine unmittelbare Bestimmung des Drehmoments nur in seltenen Fällen möglich sein. Daher werden bevorzugt andere Größen, auf welche unmittelbar zugegriffen werden kann, eingesetzt. Dies sind beispielsweise die oben angeführten elektrischen Größen. In der Praxis wird vorzugsweise nicht nur auf eine einzige dieser Größen sondern auf zusammengesetzte Größen abgestellt. So kann beispielsweise bei einer Asynchronmaschine im Anlauf der magnetische Fluss, welcher proportional zum Quotienten aus Statorspannung und Statorkreisfrequenz ist, konstant gehalten werden. Das Drehmoment ergibt sich dann aus einer Größe welche proportional dem Produkt aus Fluss und der Statorkreisfrequenz ist.

In einer weiteren vorteilhaften Ausgestaltung der Erfindung ist der Anlauf Sollwertgeber derart ausgelegt, daß er Drehmomentverläufe mit unterschiedlichen Anstiegszeiten bzw. unterschiedliche Einwirkungszeiten der maximalen Drehmomente vorgeben kann. So führt beispielsweise in der ersten Phase des Anlaufs die Krafteinwirkung in die entgegengesetzte Richtung mit einer relativ langsam ansteigenden Drehmomentkurve zu einer besonders wirksamen Entspannung der Dichtung. Ebenso wirkt sich ein Verharren des Drehmomentverlaufs auf den Wert des Anfangsdrehmoments für eine gewisse Zeitdauer besonders positiv aus. Ein solches Verharren auf einem bestimmten Drehmoment ist bei der erfindungsgemäßen Vorrichtung deshalb möglich, da das Anfangsdrehmoment bewusst so gering dimensioniert ist, daß es ausschließlich zur Entspannung aber nicht zu einem Anlauf der Pumpe führen kann.

Eine andere vorteilhafte Ausgestaltung der Erfindung besteht darin, daß der Antrieb mit eingeprägtem Strom gespeist wird. Insbesondere bei Gleichstrommaschinen ist das Drehmoment proportional dem Strom. Ebenso besteht bei Asynchronmaschinen mit eingeprägtem Strom ein direkter Zugriff auf das Drehmoment. Es wird daher der Anlaufsollwertgeber derart ausgelegt, daß er in diesem Falle Stromsollwerte für einen erfindungsgemäßen Anlauf vorgibt.

In einer weiteren vorteilhaften Ausgestaltung der Erfindung ist der Anlaufsollwertgeber derart ausgeführt, daß er im Falle eines Wiederanlaufs nach Blockieren der Pumpe eine gegenüber dem normalen Anlauf aus dem Stillstand modifizierte Anlaufsequenz abgibt. Diese modifizierte Anlaufsequenz besteht gegenüber der normalen Anlaufsequenz aus verkürzten Anstiegszeiten der Drehmomentverläufe. Somit kann durch kurze kräftige Stöße die Pumpe freigerüttelt werden. Die Wirkung der Anlaufsequenz ist in diesem Falle grundlegend unterschiedlich gegenüber der normalen Anlaufsequenz. Im Normalfall ist der sogenannte "compression set", das Anhaften des Rotors am Stator, welches meist über die gesamte Länge von Rotor und Stator an der Dichtlinie stattfindet, zu überwinden. Dies kann vorzugsweise durch die in den vorhergehenden Absätzen beschriebene Sequenz erfolgen. Im Falle des Blockierens befindet sich meist ein kleiner Partikel zwischen Rotor und Stator, der durch die kurzen, kräftigen Bewegungen wieder freigelegt und mit dem Fördermedium weitergespült werden kann.

In einer weiteren vorteilhaften Ausführung der Erfindung besitzt die Steuereinheit selbst Mittel zur Erkennung des Blockierens des Antriebs im Betrieb. Sie signalisiert damit dem Anlaufsollwertgeber ein solches Blockieren. Damit kann selbständig, ohne Eingriff eines Benutzers, die richtige Anlaufsequenz ausgewählt werden. So wird der Anlaufsollwertgeber beim nächsten Anlauf nach einer solchen Signalisierung des Blockierens des Antriebs automatisch die zweite Anlaufsequenz auswählen, welche ein Lösen der Blockierung des Antriebs bzw. der Pumpe erlaubt.

Eine weitere, besonders vorteilhafte Ausgestaltung der Erfindung besteht darin, daß durch die Steuereinheit bzw. den Anlaufsollwertgeber Anlaufsequenzen vorgegeben werden, deren Periodendauer der mechanischen Resonanzfrequenz des mechanischen Systems aus Motor und Last, in diesem Falle der Pumpe, entspricht. Somit kann das gesamte Antriebssystem in eine mechanische Resonanz gebracht werden, welche kräftige Bewegungen in beide Richtungen bei kleinem Energieeinsatz ermöglicht. Hierbei kann der Antrieb selbst mit relativ kleiner Leistung betrieben werden und auch für relativ kleine Leistung dimensioniert sein, da im Resonanzfall ausschließlich die Reibungsverluste zu überwinden sind.

Die Vorgabe der Resonanzfrequenz kann im einfachsten Falle manuell durch Eingabe eines Bedieners erfolgen. Ebenso kann der Wert Resonanzfrequenz auch in der Steuereinheit bzw. dem Anlaufsollwertgeber fest eingespeichert sein. So kann beispielsweise einmal bei der Inbetriebnahme des Systems die Resonanzfrequenz ermittelt und dann zum späteren Abruf fest gespeichert werden. Nachteilig ist bei einer festen Speicherung der Resonanzfrequenz, daß Änderungen der Resonanzfrequenz, welche sich beispielsweise. durch Änderungen der Massen aufgrund Abrieb oder auch Anlagerung von Verschmutzungen ergeben, nicht berücksichtigt werden können. Ebenso können andere Veränderungen des mechanischen Systems, wie beispielsweise wechselnde Orte in der Pumpe, an der die Blockierung stattfindet und damit unterschiedliche Elastizitätswerte im Antriebsstrang zwischen Motor und diesem Ort der Pumpe nicht berücksichtigt werden. Daher ist es sinnvoll, eine Regelung einzuführen, welche die Resonanzfrequenz ermittelt und in diesem speziellen Betriebsfalle eine Schwingung auf der Resonanzfrequenz ermöglicht. Die Methoden um eine Schwingung auf der Resonanzfrequenz zu ermöglichen, entsprechen dem Stand der Technik und sollen hier nur beispielhaft angeführt werden. So kann die Resonanzfrequenz aufgrund einer Kraftmessung, Drehmomentmessung, Beschleunigungsmessung oder auch aus Messungen des Motorstromes ermittelt werden.

In einer weiteren Ausgestaltung der Erfindung wird zusätzlich in den Kraftstrang zwischen Motor und Pumpe oder innerhalb der Pumpe ein mechanischer Energiespeicher angeordnet. Dieser mechanische Energiespeicher ist vorzugsweise ein elastisches Element mit geringer innerer Reibung, wie beispielsweise eine Feder. Diese Feder kann beispielsweise als Drehstabfeder, welche mit ihrer Längsachse in den Antriebsstrang integriert ist, als Schraubenfeder, welche ebenfalls längs ihrer Achse als Drehfeder eingesetzt wird, oder auch eine beliebige andere Feder, welche eine nicht rotatorische Federwirkung besitzt mit entsprechenden Aufnahmen bzw. Kraftumlenkungseinrichtungen ausgebildet werden. Mit einem solchen federnden. Element im Antriebsstrang läßt sich in Verbindung mit der erfindungsgemäßen Anordnung zur elektrischen Steuerung ein besonders hohes Anlaufdrehmoment realisieren. So wird in der ersten Anlaufphase die Feder entgegen der bevorzugten Anlaufrichtung vorgespannt und liefert dann in der zweiten Phase in der richtigen Richtung zusammen mit dem Motor ein zusätzliches Drehmoment. So wird in der ersten Phase durch die Vorspannung der Feder eine gewisse potentielle Energie in dieser gespeichert. Durch die Umkehrung der Drehrichtung des Antriebsmotors wird die Feder nun entspannt, der Motor kann sich hierbei aufgrund des Motorstromes und der Feder-Energie um einige Umdrehungen bewegen und gewinnt eine entsprechend höhere kinetische Energie. Nach Überschreiten des Punktes an dem die Feder entspannt ist, wird diese nun in die andere Richtung vorgespannt und gibt eine entsprechende Kraft auf die Pumpe selbst aus. Am Endpunkt der Bewegung, bei der der Motor selbst aufgrund des Erreichens eines durch den Anlaufsollwertgeber vorgegebenen maximalen Drehmoments keinen höheren Motorstrom mehr erhält, ist das maximale Drehmoment die Summe aus dem Motordrehmoment und dem Moment, welches sich durch die Vorspannung der Feder durch Umwandlung der kinetischen Energie ergibt.

Die hier beschriebene Anordnung ist besonders vorteilhaft in Verbindung mit der zuvor beschriebenen Anlaufsteuerung, welche auf der Resonanzfrequenz des mechanischen Systems arbeitet, da sich durch die zusätzliche Feder eine wesentlich niedrigere Resonanzfrequenz ergibt. Dadurch ist eine Steuerung bzw. Regelung der Resonanzfrequenz mit reduziertem Aufwand möglich.

Die Erfindung gibt ein Verfahren zum Anlauf mit verringertem Drehmoment an, welches vorteilhafterweise für Pumpen einsetzbar ist.
Zuerst wird die Pumpe mit einem Drehmoment beaufschlagt, welches vorzugsweise entgegen der gewünschten Laufrichtung liegt und geringer ist, als das zu erwartende Losbrechmoment der Pumpe. Damit ist sichergestellt daß die Pumpe in dieser Phase noch nicht anläuft. Durch die Drehmomentbeaufschlagung in entgegengesetzter Richtung wird die Vorspannung, welche sich beispielsweise aufgrund der Reibung zwischen Dichtung und drehenden Teilen ergibt, abgebaut, ebenso wird das Haftmoment innerhalb der Pumpe, welches gerade bei Exzenterschneckenpumpen besonders ausgeprägt ist, reduziert. In einer darauffolgenden Phase wird die Pumpe mit einem höheren Drehmoment in der entgegengesetzten Richtung beaufschlagt. Somit ist durch die vorhergehende Entlastungsphase ein Anlauf mit wesentlich geringerem Drehmoment möglich. Führt diese Phase nicht zum Anlauf, so folgen weitere Phasen mit jeweils einem gegenüber der vorhergehenden Phase höherem maximalen Drehmoment in umgekehrter Richtung. Diese Anlaufsequenz wird erst dann abgebrochen, wenn der Antrieb in eine kontinuierliche Bewegung übergeht oder ein vorgegebener Grenzwert erreicht wird.

Eine Vorrichtung, bestehend aus einem Motor mit angekoppelter Pumpe, besitzt mindestens einen zusätzlichen Schwingungsgeber, welcher mechanische Schwingungen auf Motor, Pumpe oder ein anderes Element des Kraftstrangs einkoppelt. Die Schwingungen besitzen vorzugsweise eine Amplitude, welche klein gegen die Hauptbewegungsamplitude von Motor bzw. Pumpe sind. Weiterhin besitzen diese Schwingungen vorzugsweise eine Frequenz, welche hoch gegenüber der Bewegungsfrequenz von Motor bzw. Pumpe ist. Je nach Anwendungsfall kommen vorzugsweise translatorische oder rotatorische Schwingungen oder auch Kombinationen daraus zum Einsatz.

Derartige Schwingungen, welche der Hauptbewegung überlagert sind, haben mehrere Auswirkungen:
Zunächst wird im laufenden Betrieb die Wahrscheinlichkeit des Blockierens der Pumpe durch kleine Partikel wesentlich verringert, da diese durch die zusätzliche überlagerte Bewegung schnell aus dem Spalt zwischen Rotor und Stator hinausbefördert bzw. dort zermahlen werden. Durch die Wahl der Art der Schwingung lässt sich dieser Effekt noch erhöhen. So kann beispielsweise bei einer Kreiselpumpe eine zusätzliche axiale Schwingung ein Partikel schnell in axialer Richtung aus der Pumpe herausbefördern, welches sonst noch lange radial der Drehung der Pumpe gefolgt wäre.

Im Stillstand der Pumpe führt die zusätzliche Schwingung zu einer Verringerung des "compression set", also dem Festsetzen der Pumpe aufgrund der zum Betrieb benötigten mechanischen Vorspannung, und damit zu einem leichteren Wiederanlauf. Für einen erleichterten Anlauf genügt es somit, dass kurz vor dem Anlauf bzw. während des Anlaufs die zusätzliche Schwingung aktiviert wird.
Ist die Pumpe blockiert, so kann diese durch die zusätzliche Schwingung wieder zum Laufen gebracht werden. Dabei. kann durch die Schwingung erreicht werden, dass das blokkierende Partikel aus der Pumpe hinausbefördert bzw. in dieser zermahlen wird.

Die Schwingungseinkopplung ist unabhängig von der Art des Antriebs der Pumpe. So kann diese bevorzugt mit einem Elektromotor, aber ebenso auch mit einem Benzin - oder anderen Motor angetrieben werden.

In einer bevorzugten Ausführung der Erfindung erfolgt die Einkopplung der zusätzlichen Schwingung mit einem Schwingungsgeber, welcher direkt an die Pumpe gekoppelt ist. Zur Schonung der übrigen Elemente des Antriebs, insbesondere der Lager, ist weiterhin eine mechanische Entkopplung für die Schwingungen, beispielsweise durch einen Gummibalg oder durch ein federndes Element, welches zusammen mit den Massen auf der pumpenfernen Seite Tiefpasscharakter und somit eine hohe Dämpfung der Schwingungen aufweist, vorgesehen.

Die zusätzliche mechanische Schwingung kann mit anderen Verfahren bzw. Vorrichtungen, welche einen verbesserten Anlauf bewirken, kombiniert werden. So bringt beispielsweise eine Anlaufsteuerung, welche einen mehrphasigen Anlauf mit steigendem Drehmoment bei wechselnden Anlaufrichtungen kombiniert, besonders gute Ergebnisse.

Zur Optimierung kann noch die Einschaltdauer bzw. Amplitude oder auch Frequenz der Schwingungen verändert werden. So führen insbesondere Ultraschallschwingungen hoher Amplitude zu einer hohen Materialbelastung und damit zu hoher Verlustwärme durch die innere Reibung sowie einer schnellen Materialermüdung. Daher wird zweckmäßigerweise die Pumpe nur im Blockierfall zum Lösen der Blockierung bzw. zum leichteren Anlauf mit derartigen Schwingungen hoher Amplitude beaufschlagt. Im Dauerbetrieb bietet sich hier eine niedrigere Schwingungsamplitude an.

Führt eine bestimmte Frequenz nicht zur schnellen Lösung der Blockierung der Pumpe, so kann dies durch eine Sequenz unterschiedlicher Frequenzen verbessert werden.

In einer weiteren vorteilhaften Ausgestaltung der Erfindung wird der Schwingungsgeber als piezokeramisches Element realisiert. Hiermit können auf einfache Weise auch hochfrequente Schwingungen, bevorzugt im Ultraschallbereich, erzeugt werden. Derartige piezokeramische Elemente sind äußerst robust und einfach in der Anwendung.

Eine Vorrichtung, bestehend aus einem Motor mit angekoppelter Pumpe, besitzt zur Kraftkopplung zwischen diesen oder auch im Kraftstrang innerhalb der Pumpe ein Kupplungselement mit mechanischem Spiel. Dadurch kann beim Anlauf der Motor beim Durchlaufen des mechanischen Spiels eine gewisse kinetische Energie aufbauen. Diese erzeugt nun beim Auflaufen auf den stehenden Pumpenrotor neben dem Motordrehmoment ein zusätzliches Drehmoment, welches ein Lösen der Blockierung der Pumpe bewirkt.

In einer weiteren vorteilhaften Ausgestaltung der Erfindung wird der Motor zuerst in eine Richtung, welche entgegengesetzt der gewünschten Bewegungsrichtung läuft, bewegt, um das Kupplungselement auf den entgegengesetzten Anschlag zu bewegen, so dass für den Anlauf der volle Bewegungswinkel des Kupplungselementes zur Verfügung steht.

Eine besonders vorteilhafte Ausgestaltung der Erfindung sieht ein Kupplungselement vor, welches eine Rotation gleichzeitig in eine translatorische Bewegung umwandelt. Damit kann durch eine der rotatorischen Bewegung überlagerte translatorische Bewegung die Pumpe deblockiert werden.

In einer weiteren vorteilhaften Ausgestaltung der Erfindung sind der Kupplung mechanische Energiespeicher, insbesondere Federn, parallelgeschaltet.

Eine andere vorteilhafte Weiterbildung der Erfindung besitzt mindestens ein federndes Element in Serie zum Kupplungselement.

### Übersicht über die Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird.

Es zeigen:
Fig. 1 den charakteristischen Drehmomentverlauf einer erfindungsgemäßen Vorrichtung.
Fig. 2 den charakteristischen Drehmomentverlauf einer erfindungsgemäßen Vorrichtung bei mehreren Anlaufzyklen.
Fig. 3 ein elektrisches Blockschaltbild einer erfindungsgemäßen Vorrichtung.
Fig. 4 die prinzipielle mechanische Anordnung mit einem zusätzlichen mechanischen Schwingungsgeber
Fig. 5, 6 und 7 bevorzugte Ausführungsformen von mechanischen Kupplungen

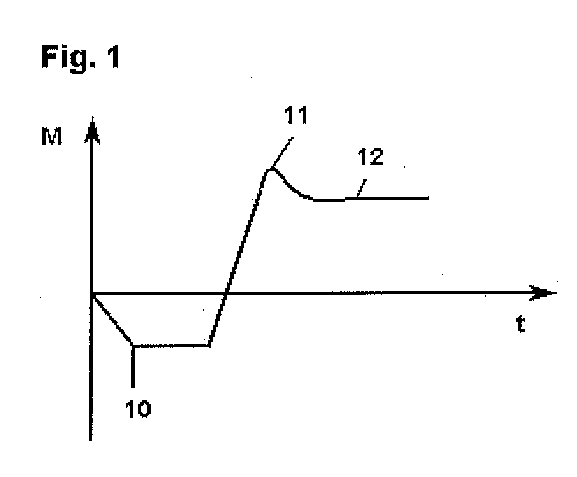

Figur 1 zeigt beispielhaft einen charakteristischen Drehmomentverlauf, wie er bei einem typischen Anlaufzyklus einer erfindungsgemäßen Vorrichtung auftritt. In einem Diagramm ist hier das Drehmoment (M) über die Zeit (t) aufgetragen. Das Diagramm ist so skaliert, daß im Normalfall bei regulärer Last, also wenn der Motor selbst Arbeit verrichtet und nicht als Generator betrieben wird, ein positives Drehmoment dem Drehmoment in der gewünschten Solldrehrichtung des Motors entspricht.

Der Anlaufzyklus beginnt zunächst bei stehendem Motor und einem Drehmoment M=0. Dieser Punkt entspricht dem Schnittpunkt der beiden Achsen im Diagramm. Zum Anlauf wird nun vom Anlaufsollwertgeber ein steigendes Drehmoment entgegen der gewünschten Anlaufrichtung vorgegeben. Die Drehmomentsteigerung wird solange fortgesetzt, bis ein maximales Anfangsdrehmoment (10) erreicht ist. Im vorliegenden Falle wird eine gewisse Zeit bei diesen Drehmoment verharrt. Damit kann sich die Dichtung entspannen und auch die Vorspannung innerhalb der Pumpe verringern. Je nach Pumpenausführung kann diese Dauer sehr kurz, beispielsweise im Millisekunden-Bereich oder auch Sekunden-Bereich sein. Wesentlich bei der Dimensionierung des maximalen Anfangsdrehmoments ist, daß es unter dem Losbrechmoment der Pumpe liegt, so daß in der ersten Anlaufphase noch kein Anlauf der Pumpe erfolgt, da dieser in der verkehrten Richtung erfolgen würde. Nach kurzem Verharren auf dem Anfangsdrehmoment wird nun das Drehmoment erhöht, in Richtung auf die bevorzugte Anlaufrichtung. Dies erfolgt nun solange, bis das Losbrechmoment der Pumpe erreicht hat und diese sich in Bewegung setzt. Im Diagramm ist das Losbrechmoment im Punkt (11) erreicht. Der Antrieb beginnt hier zu beschleunigen, bis er die Solldrehzahl erreicht ist. Damit sinkt auch das Drehmoment auf einen Wert (12), welcher für den normalen Betrieb notwendig ist.

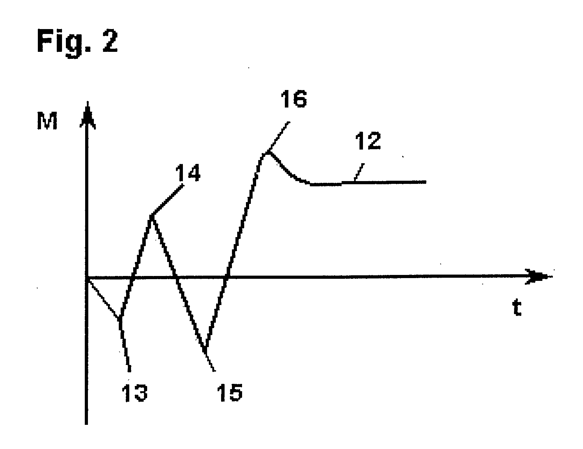

In Fig. 2 ist beispielhaft eine Anlaufsequenz vorgegeben, bei der, abweichend von der in Figur 1 dargestellten Anlaufsequenz, kein Anlauf innerhalb des ersten Zyklus möglich war. Derartige Fälle treten auf, wenn ein besonders hohes Losbrechmoment vorliegt, oder der Antrieb bewußt klein dimensioniert wurde. Ein besonders hohes Losbrechmoment kann beispielsweise im Falle des Blockierens vorliegen. Die Darstellungsweise und Skalierung entspricht dem Diagramm aus Figur 1. Zunächst beginnt die Anlaufphase wie in Figur 1 mit einem steigenden Drehmoment entgegen der gewünschten Anlaufrichtung. Sobald das maximale Anfangsdrehmoment (13) erreicht ist, wird hier beispielhaft, ohne Verharren bei diesem Drehmoment, sofort mit einer Erhöhung des Drehmoments in Richtung der gewünschten Anlaufrichtung begonnen. Das Drehmoment wird solange erhöht, bis ein zweiter Grenzwert erreicht wird oder der Antrieb anläuft. Der zweite Grenzwert (14) liegt vom Betrag über dem vorhergehenden Grenzwert. Im gezeigten Beispiel erfolgt bei diesem Wert noch kein Anlauf. Nun wird das Drehmoment wieder in die entgegengesetzte Richtung erhöht, bis ein weiterer Grenzwert (15), welcher vorzugsweise wiederum über dem vorhergehenden Grenzwert liegt, erreicht ist. Schließlich erfolgt wieder eine Erhöhung in Richtung des gewünschten Anlaufs. Hier erfolgt nun im vorliegenden Beispiel beim Erreichen des Losbrechmoments (16) ein Anlauf des Antriebs. Ebenso wie in Figur 1 beginnt der Antrieb nun zu beschleunigen, bis seine Solldrehzahl erreicht ist. Somit sinkt das Drehmoment auch hier auf einen Wert (12), welcher für den normalen Betrieb notwendig ist.

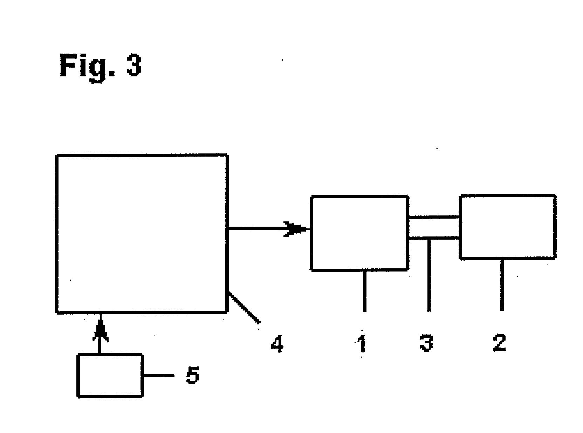

In Figur 3 wird ein Blockschaltbild einer erfindungsgemäßen Vorrichtung gezeigt. Ein elektrischer Antrieb (1) ist mechanisch, beispielsweise über eine Welle (3) mit einer Pumpe (2) gekoppelt, um diese anzutreiben. Der elektrische Antrieb selbst besteht vorzugsweise aus einem Asynchronmotor oder auch aus einem Gleichstrommotor. Selbstverständlich kann hier auch jede andere Art von elektrischem Motor eingesetzt werden. Die Steuerung des elektrischen Antriebs erfolgt mittels einer Steuereinheit (4), welche auf elektrischem Wege, beispielsweise durch Beeinflussung von Spannung, Strom, Frequenz, welche in den Rotor bzw. Stator gespeist werden, die mechanische Parameter wie Drehzahl oder Drehmoment beeinflussen. Erfindungsgemäß ist ein Anlaufsollwertgeber (5) vorhanden. Dieser kann entweder eine eigenständige Einheit oder auch in die Steuereinheit integriert sein. Der Anlaufsollwertgeber ist nun derart konfiguriert, daß er der Steuereinheit einen zeitlichen Drehmoment-Sollwertverlauf entsprechend dem Anspruch 1 vorgibt.

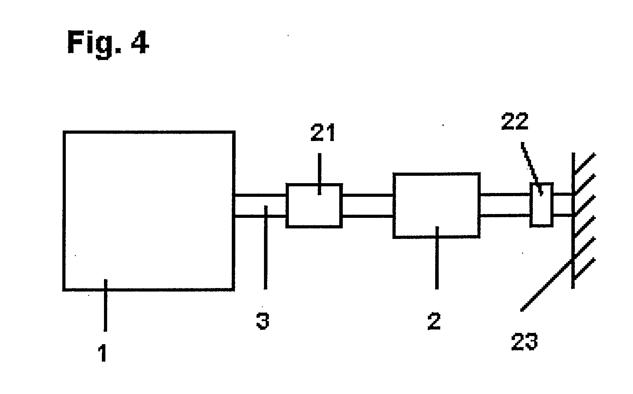

In Figur 4 ist als Blockdiagramm beispielhaft eine erfindungsgemäße Anordnung mit einem zusätzlichen mechanischen Schwingungsgeber dargestellt. Wie in Figur 3 ist der Antrieb (1) über eine Welle (3) mit der Pumpe (2) gekoppelt. Um nun zusätzliche mechanische Schwingungen in die Pumpe selbst einzukoppeln, ist ein mechanischer Schwingungsgeber (22), vorzugsweise an dem vom Motor abgewandten Ende der Pumpe angeordnet. Dieser Schwingungsgeber ist gegen einen festen Bezug (23), wie ein Fundament oder auch das Pumpengehäuse, abgestützt. Damit die zusätzlichen mechanischen Schwingungen nicht in den Motor selbst eingekoppelt werden und zu einer zusätzlichen Belastung des Motors bzw. seiner Komponenten, wie beispielsweise der Lager, führen, ist ein Schwingungsdämpfer (21) im Antriebsstrang zwischen Motor und Pumpe angeordnet. Die Aufgabe dieses Schwingungsdämpfers ist es, ein Fortpflanzen der Schwingungen in den Motor zu verhindern. Hierbei gibt es grundsätzlich mehrere Möglichkeiten zur Gestaltung dieses Schwingungsdämpfers. So kann er aus einem verlustbehafteten, absorbierenden Material wie beispielsweise Gummi bestehen. Der Nachteil ist hier, daß der Schwingungsgeber zusätzliche Energie erzeugen muß, welche dann wiederum im Schwingungsdämpfer absorbiert wird und zu einer unerwünschten Erwärmung desselben führt. Daher ist es vorteilhaft, diesen als resonanzfähiges Gebilde auszuführen, welches gerade die bevorzugte Arbeitsfrequenz des Schwingungsgebers besonders stark dämpft.

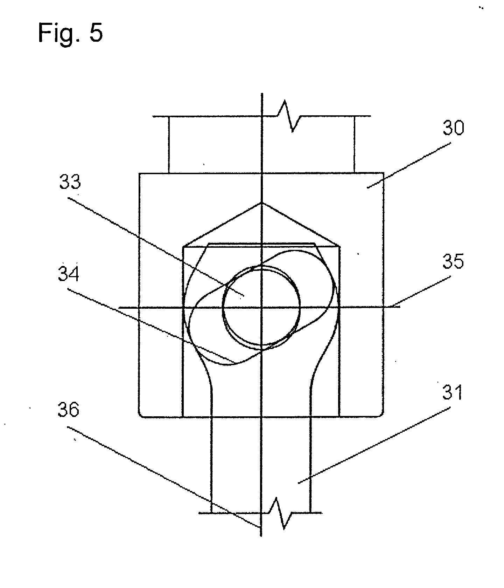

In den Abbildungen 5 bis 7 werden beispielhaft einige besonders vorteilhafte Kupplungen zwischen Antrieb (Motor) und Last (Pumpe) dargestellt. Diese und alle weiteren erfindungsgemäßen Kupplungen sind grundsätzlich an einer beliebigen Position zwischen Antrieb und Last einsetzbar. So können diese beispielsweise direkt am Motor oder auch an der Pumpe angebracht bzw. in das Gehäuse von Motor bzw. Pumpe, beispielsweise als Teil der Kuppelstange, integriert werden.

In Figur 5 ist beispielhaft eine erste bevorzugte Ausführungsform einer mechanischen Kupplung zwischen Motor und Pumpe dargestellt. Diese Kupplung besteht aus einem ersten Element (30) und einem zweiten Element (31). Diese sind verbunden über einen Bolzen (33), der im ersten Element befestigt ist und der in einem Langloch (34) des zweiten Elements geführt ist. Das Langloch selbst kann parallel zur Senkrechten (35) auf die Rotationsachse der Kupplung (36) oder auch in einem Winkel zu dieser angeordnet sein. In der ersten Phase des Anlaufs mit einem Drehmoment entgegengesetzt der bevorzugten Laufrichtung wird sich der Motor nun bis zu einem Ende des sich durch das Langloch ergebenden Kupplungsspieles bewegen. Mit einer Änderung des Drehmoments in die entgegengesetzte Richtung kann sich der Motor nun aufgrund des Kupplungsspieles geringfügig bewegen und somit kinetische Energie aufbauen. Am Ende des Kupplungsspiels wird diese als ein Stoß an die Pumpe abgegeben. Somit entsteht kurzzeitig ein wesentlich höheres Drehmoment als das Motordrehmoment selbst, welches zu einem Anlauf bzw. einem Deblockieren der Pumpe führt. In einer besonders vorteilhaften Ausführungsform wird das Langloch nun in einem Winkel zur Senkrechten auf die Rotationsachse der Kupplung angeordnet. Dadurch ergibt sich in der Anlaufphase ein zusätzlicher Hub in Richtung der Längsachse, welche ebenfalls das Anlaufen erleichtert bzw. zu einer Deblockierung der Pumpe führt.

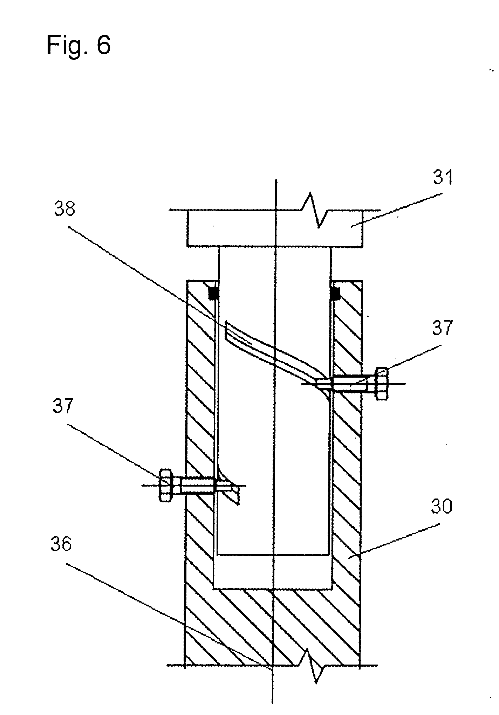

Eine weitere vorteilhafte Ausführungsform einer Kupplung zwischen Motor und Pumpe ist in Figur 6 dargestellt. Die Funktionsweise ist ähnlich der in Figur 5 dargestellten Kupplung. Gleichwirkende Teile sind mit den gleichen Ziffern beschriftet, so daß deren Funktion auch hier nicht weiter erläutert wird. Der wesentliche Unterschied liegt hierin, daß die Kopplung über einen oder mehrere Stifte (37) des ersten Elements erfolgt, die in schraubenförmigen Nuten (38) des zweiten Teils geführt sind.

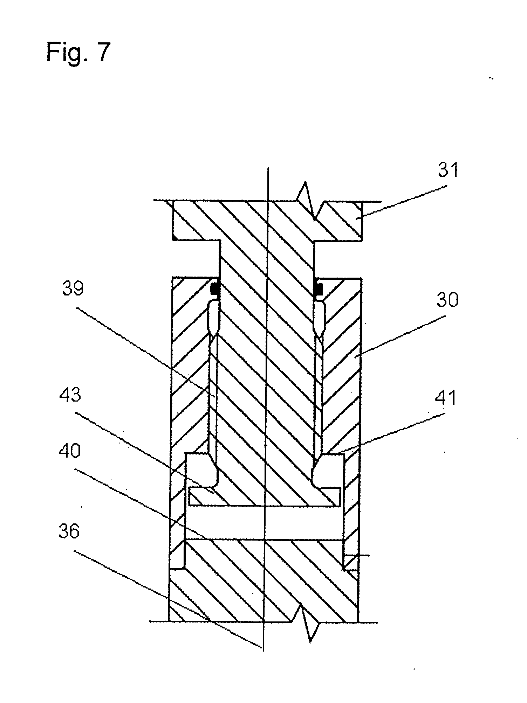

Eine dritte vorteilhafte Ausführungsform der Kupplung ist beispielhaft in Figur 7 dargestellt. Hier ist die Funktionsweise ebenso grundsätzlich ähnlich der in Figur 5 dargestellten Kupplung. Die Kopplung erfolgt über einen oder mehrere Gewindegänge (39). Zur Begrenzung der Drehbewegung zwischen dem ersten und dem zweiten Element (30,31) sind die beiden Endflächen (40) und (41) vorgesehen, welche den Hub des Stempels (43) begrenzen.

## Patentansprüche

1. Vorrichtung zum vorzugsweisen Antrieb von Pumpen (2), bestehend aus einer Steuereinheit (4) und einem elektrischen Antrieb (1),
**dadurch gekennzeichnet, dass**
ein Anlaufsollwertgeber (5) vorhanden ist, welcher derart konfiguriert ist, daß er der Steuereinheit (4) zum Anlauf des Antriebs (1) einen zeitlichen Drehmoment-Sollwertverlauf derart angibt, daß der Antrieb (1) zunächst in eine erste Richtung, welche vorzugsweise entgegen der gewünschten Anlaufrichtung liegt, mit steigendem Drehmoment bis zu einem maximalen Anfangsdrehmoment (10) gesteuert wird, anschließend erfolgt eine Steuerung in die entgegengesetzte Richtung mit steigendem Drehmoment bis hin zu einem Drehmoment (11), welches über dem vorhergehenden maximalen Anfangsdrehmoment (10) liegt, wobei die Sequenz der Steuerung in die entgegengesetzte Richtung bis zum Erreichen eines maximal Drehmoments, welches jeweils über dem vorhergehenden maximalen Drehmoment liegt solange fortgesetzt wird, bis der Antrieb in eine kontinuierliche Bewegung übergeht oder ein vorgegebener Grenzwert erreicht ist.

2. Vorrichtung nach Anspruch 1,
**dadurch gekennzeichnet, dass**
der Grenzwert, welcher zum Abbruch der Anlaufsequenz führt, wahlweise ein Drehmomentgrenzwert, ein Stromgrenzwert, ein Spannungsgrenzwert, ein Zeitgrenzwert oder ein aus diesen zusammengesetzter Grenzwert ist.

3. Vorrichtung nach Anspruch 1 bzw. 2,
**dadurch gekennzeichnet, dass**
der Anlaufsollwertgeber (5) zur Vorgabe von unterschiedlichen Drehmoment-Anstiegszeiten sowie Drehmomenteinwirkungsdauern ausgelegt ist, welche wahlweise von der Steuereinheit (4) vorgegeben werden können.

4. Vorrichtung nach einem der Ansprüche 1 bis 3,
**dadurch gekennzeichnet, dass**
der elektrische Antrieb (1) vorzugsweise mit eingeprägtem Strom gespeist wird und der Anlaufsollwertgeber (5) derart gestaltet ist dass er die entsprechenden Strom - Sollwerte vorgibt.

5. Vorrichtung nach einem der Ansprüche 1 bis 4,
**dadurch gekennzeichnet, dass**
der Anlaufsollwertgeber (5) für den Fall des Wiederanlaufs nach Blockieren der Pumpe (2) eine Anlaufsequenz mit besonders kurzen Drehmoment-Anstiegszeiten signalisiert.

6. Vorrichtung nach einem der Ansprüche 1 bis 5,
**dadurch gekennzeichnet, dass**
die Steuereinheit Mittel zur Erkennung eines Blockierens des Antriebs (1) im Betrieb besitzt und im Falle des Blockierens dem Anlaufsollwertgeber (5) dies signalisiert.

7. Vorrichtung nach einem der Ansprüche 1 bis 6,
**dadurch gekennzeichnet, dass**
der Anlaufsollwertgeber (5) auf Anforderung durch die Steuereinheit Anlaufsequenzen mit einer Frequenz, die der Resonanzfrequenz des mechanischen Systems aus Motor und Pumpe entspricht, abgibt.

8. Vorrichtung nach einem der Ansprüche 1 bis 7,
**dadurch gekennzeichnet, dass**
zusätzlich im Kraftstrang zwischen Antrieb (1) und Pumpe (2) ein mechanischer Energiespeicher, insbesondere ein federndes Element, angeordnet ist.

9. Verfahren zum vereinfachten Anlauf von Pumpen mit verringertem Drehmoment,
**dadurch gekennzeichnet, dass**
der Anlauf zunächst in eine erste Richtung, welche vorzugsweise entgegen der gewünschten Laufrichtung liegt, mit steigendem Drehmoment bis zu einem maximalen Anfangsdrehmoment (13), welches unter dem Losbrechmoment (11) liegt, erfolgt, anschließend erfolgt eine Steuerung in die entgegengesetzte Richtung mit steigendem Drehmoment bis hin zu einem Drehmoment, welches über dem vorhergehenden maximalen Anfangsdrehmoment liegt, wobei die Sequenz der Steuerung in die entgegengesetzte Richtung bis zum Erreichen eines maximalen Drehmomentes, welches jeweils über dem vorhergehenden maximalen Drehmoment liegt solange fortgesetzt wird, bis der Antrieb in eine kontinuierliche Bewegung übergeht oder ein vorgegebener Grenzwert erreicht ist.

10. Vorrichtung zum vorzugsweisen Antrieb von Pumpen,
**dadurch gekennzeichnet, dass**
mindestens ein zusätzlicher Schwingungsgeber (22) vorhanden ist, welcher rotatorische oder auch translatorische Schwingungen auf den Kraftstrang, insbesondere die Pumpe, (2) erzeugt.

11. Vorrichtung nach Anspruch 10,
**dadurch gekennzeichnet, dass**
der Schwingungsgeber (22) als piezokeramisches Element insbesondere für Ultraschallschwingungen ausgebildet ist.

12. Vorrichtung nach Anspruch 10 bzw. 11,
**dadurch gekennzeichnet, dass**
der Schwingungsgeber (22) fest an die Pumpe angekoppelt und diese wiederum für die Schwingungen von dem übrigen Antriebsstrang, insbesondere dem Motor entkoppelt ist.

13. Vorrichtung nach einem der Ansprüche 10 bis 12,
**dadurch gekennzeichnet, dass**
zusätzlich ein Anlaufsollwertgeber (5) vorhanden ist, welcher eine Sequenz von steigenden Drehmomenten in wechselnde Richtungen vorgibt.

14. Vorrichtung nach Anspruch 10 bis 13,
**dadurch gekennzeichnet, dass**
die Amplitude bzw. Frequenz des Schwingungsgebers an unterschiedliche Einsatzfälle anpassbar ist.

15. Vorrichtung zum vorzugsweisen Antrieb von Pumpen,
**dadurch gekennzeichnet, dass**
zur Kraftkopplung zwischen Antrieb und Last wenigstens ein Kupplungselement mit mechanischem Spiel, insbesondere für die Rotation, vorgesehen ist.

16. Vorrichtung nach Anspruch 15,
**dadurch gekennzeichnet, dass**
das Kupplungselement zusätzlich eine rotatorische Bewegung in eine translatorische Bewegung umsetzt.

17. Vorrichtung nach Anspruch 15 bzw. 16,
**dadurch gekennzeichnet, dass**
das Kupplungselement mit mindestens einem mechanischen Energiespeicher, insbesondere einer Feder, überbrückt ist.

18. Vorrichtung nach einem der Ansprüche 15 bis 17,
**dadurch gekennzeichnet, dass**
zusätzlich zum Kupplungselement im Kraftstrang zwischen Antrieb und Last ein mechanischer Energiespeicher, vorzugsweise eine Feder, angeordnet ist.
